# EUROPEAN PATENT APPLICATION

(11) **EP 2 637 378 A1**
(43) Date of publication of application: **11.09.2013**
(21) Application number: 10860007.3
(22) Date of filing: 24.11.2010
(51) Int. Cl.: H04L 29/06

(54) **METHODS AND NETWORK ENTITIES FOR ACQUIRING IP ADDRESS OF USER**

(71) Applicant: Huawei Technologies Co., Ltd., Shenzhen, Guangdong 518129 (CN)
(72) Inventor: ZHOU, Han, Shenzhen Guangdong 518129 (CN); WU, Wenfu, Shenzhen Guangdong 518129 (CN)
(74) Representative: Epping - Hermann - Fischer
(86) International application number: PCT/CN2010/079071
(87) International publication number: WO 2012/068728

(57) **Abstract**

The present invention relates to a method and a network entity for obtaining an IP address of a user. The method includes: receiving, by a first network element from a second network element, a message for obtaining an IP address of a user; allocating, by the first network element, an IP address to the user, and sending the IP address to the second network element; and receiving, from a gateway, a search message that carries the IP address, learning an identity of the user, and sending the identity of the user to the gateway. That is, a first network element allocates an IP address to a user, a second network element and a gateway obtain the IP address, so that the second network element can create a connection to the user, thereby solving the problem in the prior art that the second network element is unable to obtain the IP address because a static IP address cannot be configured for an M2M terminal when a network pushes a service.

## Description

### FIELD OF THE INVENTION

Embodiments of the present invention relate to the field of communication technologies, and in particular, to a method and a network entity for obtaining an IP address of a user.

### BACKGROUND OF THE INVENTION

To meet challenges of wireless broadband technologies and keep the cutting edge of the 3GPP network, the 3GPP formulated a long term evolution (LTE, Long Term Evolution) program at the end of 2004. Under guidance of this program, a new mobile communication network architecture is defined. Compared with the existing GPRS/UMTS, the architecture is flatter and retains only a packet switched domain, so it is referred to as an evolved packet network (EPS, evolved packet system).

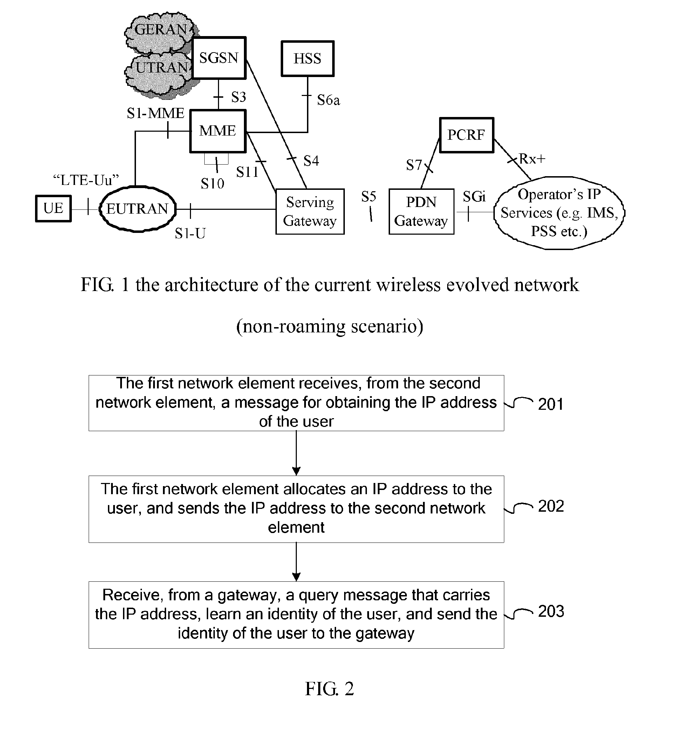

As shown in FIG. 1, a core network of the wireless evolved network primarily includes three logical functional entities: an MME, a Serving Gateway, and a PDN Gateway. The MME is a mobility management entity that is responsible for NAS signaling, NAS signaling encryption, roaming, tracking, and so on, and for allocating a temporary identity of a user, security functions, and so on. It corresponds to a control plane part of an SGSN inside the current UMTS. The Serving Gateway (S-GW) is responsible for local mobility anchoring, mobility anchoring inside a 3GPP system, and lawful interception of relevant information; and the PDN Gateway (P-GW) is responsible for policy execution, charging, lawful interception, and so on. The communication model illustrated in FIG. 1 is primarily intended for the application of H2H (Human to Human) communication currently while an M2M (Machine to Machine) application refers to network communication of one network element or multiple network elements without human participation, such as traffic control and management, factory monitoring, remote meter reading, and so on. An M2M terminal device may be connected to an application server through a wireless evolved network to perform data communication. Currently, the M2M application may still depend on the network architecture shown in FIG. 1. With ongoing development, a future network architecture may be different from the architecture.

No matter whether the communication process is an H2H or M2M communication process, the network needs to trigger the terminal to create a bearer. Especially in an M2M application, an industrial user or an application server (MTC Server) is required to trigger an M2M terminal device to initiate a service because of no human participation in the M2M application. After receiving a trigger message, the M2M terminal device needs to initiate connection setup and perform data communication with the application server through the wireless evolved network.

In an H2H communication system in the prior art, a connection setup procedure initiated by a terminal as triggered by the network is an activation procedure initiated by the network. After a gateway receives a packet sent to a user, if no PDP context (bearer) information of the user exists on the gateway, the gateway performs the following operations: The gateway learns the IP address of the user according to the received packet, and learns the IMSI of the user according to a mapping relationship between a configured IP address and an IMSI of the user. According to the learned IMSI, the gateway addresses a subscription database to learn information of a mobility management element to which the user is attached. The gateway sends a packet notification request message to the learned mobility management element, and the mobility management element sends a message for requesting activation of a PDP context to the user. After receiving the message, the user initiates a PDP context activation procedure, so as to initiate a service connection setup procedure.

As described above, in an H2H communication system, a condition for the network to initiate an activation procedure is that the user has a static IP address. The network needs to configure the static IP address of the user on different network elements such as the subscription database and the gateway, and the application server also needs to configure the IP address information of the user. Further, a mapping relationship between a static IP address of a user and an identity IMSI of the user needs to be configured on the gateway. If an activation mechanism of the network is applied in an M2M scenario and the network triggers an M2M terminal device to perform the mechanism, it is also necessary to configure the mapping relationship between a static IP address of the user and an identity IMSI of the user. However, in an M2M application, a huge number of M2M terminal devices exist. If a static IP address is allocated to every M2M terminal device, IP address shortage may occur. A further consequence is that a huge amount of configuration information is configured on a gateway (GGSN/PGW). Because the gateway has no specific database functions, the implementation of the gateway may be rather complicated. In addition, the static IP address of the M2M terminal device needs to be configured on different network elements such as the subscription database, the gateway, and the application server, which may increase the workload of operation and maintenance drastically.

### SUMMARY OF THE INVENTION

Embodiments of the present invention provide a method and a network entity for obtaining an IP address of a user to solve a problem in the prior art that a network is unable to obtain an IP address because a static IP address cannot be configured for an M2M terminal when the network pushes a service.

An embodiment of the present invention provides a method for obtaining an IP address of a user, including: receiving, by a first network element from a second network element, a message for obtaining an IP address of a user; allocating, by the first network element, an IP address to the user, and sending the IP address to the second network element; and receiving, from a gateway, a search message that carries the IP address, learning an identity of the user, and sending the identity of the user to the gateway.

An embodiment of the present invention provides another method for obtaining an IP address of a user, including: receiving, by a first network element from a second network element, a message for obtaining an IP address of a user; learning, by the first network element, an identity of the user according to the message for obtaining the IP address of the user, allocating an IP address to the user, and sending the identity of the user and the IP address to a gateway; and sending, by the first network element, the IP address of the user to the second network element after receiving a notification message from the gateway.

An embodiment of the present invention provides a network entity, which includes a receiving unit, a first learning unit, an allocating unit, and a sending unit. The receiving unit receives, from a second network element, a message for obtaining an IP address of a user; the allocating unit allocates an IP address to the user; the sending unit sends the IP address to the second network element; the receiving unit receives, from a gateway, a search message that carries the IP address; and the first learning unit obtains an identity of the user according to the IP address; and the sending unit sends the identity of the user to the gateway.

An embodiment of the present invention provides another network entity, which includes a receiving unit, a sending unit, an allocating unit, and a first learning unit. The receiving unit receives, from a second network element, a message for obtaining an IP address of a user; the first learning unit learns an identity of the user according to the message for obtaining the IP address of the user; the allocating unit allocates an IP address to the user; the sending unit sends the identity of the user and the IP address to a gateway; and the sending unit sends the IP address of the user to the second network element after the receiving unit receives a notification message from the gateway.

As can be learned from the above technical solutions, in the embodiments of the present invention, a first network element allocates an IP address to a user, a second network element and a gateway obtain the IP address, so that the second network element can create a connection to the user, thereby solving a problem in the prior art that the second network element is unable to obtain the IP address because a static IP address cannot be configured for an M2M terminal when the network pushes a service.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following descriptions show merely some embodiments of the present invention, and persons of ordinary skill in the art may still derive other drawings from the accompanying drawings without creative efforts.

FIG. 1 is a structural diagram of a network in the prior art;

FIG. 2 is a schematic flowchart of a method for obtaining an IP address of a user according to a first embodiment of the present invention;

FIG. 3 is a schematic signaling diagram of a method for obtaining an IP address of a user according to a second embodiment of the present invention;

FIG. 4 is a schematic flowchart of a method for obtaining an IP address of a user according to a third embodiment of the present invention;

FIG. 5 is a schematic signaling diagram of a method for obtaining an IP address of a user according to a fourth embodiment of the present invention;

FIG. 6 is a schematic structural diagram of a network entity for obtaining an IP address of a user according to a fifth embodiment of the present invention;

FIG. 7 is a schematic structural diagram of a network entity for obtaining an IP address of a user according to a sixth embodiment of the present invention; and

FIG. 8 is a schematic structural diagram of a system for obtaining an IP address of a user according to a seventh embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention. In addition, although the problem that the embodiments of the present invention intend to solve is caused by an M2M application, the technical solutions of the embodiments of the present invention are also applicable to an H2H communication system and other communication systems that involve an IP address of a user.

In the embodiments of the present invention, a first network element is a network element capable of addressing a user (triggering the user to initiate connection setup), that is, sending an identity of the user (such as an IMSI or MSISDN or IMEI) to a core network element, so that according to the identity of the user, the core network element (such as an SGSN/MME or a GGSN/PGW or an HLR/HSS) triggers the user to initiate a connection setup procedure (a PDP activation procedure or a PDN connection setup procedure). In the process of addressing the user (triggering the user to initiate connection setup), the first network element may allocate an IP address to the user. The specific form of the first network element may be a network element entity that has functions of a DNS server or a DHCP server or an AAA server (that is, the DNS server or the DHCP server or the AAA server is deployed independently and is a stand-alone functional entity device), or may be a logical network element or network element entity that is formed by multiple network elements having such functions (for example, in an M2M application, the first network element may be specifically an M2M platform or M2M Proxy, or the first network element is another logical network element or network element entity formed by a DNS server and an AAA server), or may be another form of a network element entity or logical network element, which is not limited by the present invention. The first network element may further have the following functions: a. The first network element is capable of storing a binding (association) relationship between a name of a user and an IP address of the user; b. The first network element is capable of allocating an IP address.

The second network element in the embodiments of the present invention is a server capable of pushing a service to the user and is a network element capable of obtaining the IP address of the user from another network element according to the name of the user (for example, a domain name or URI or URL of the user). Further, after obtaining the IP address of the user, the second network element may send data to the user according to the obtained IP address. The specific form of the second network element may be an application server (Application Server, for example, it may specifically an MTC server in an M2M application), or another form of a network element entity), which is not limited by the present invention.

FIG. 2 is a schematic flowchart of a method for obtaining an IP address of a user according to a first embodiment of the present invention. In the embodiment, a first network element allocates an IP address to a user, and sends the IP address to a second network element. After a search message that carries the IP address is received from a gateway, the IP address of the user is sent to the gateway.

201. The first network element receives, from the second network element, a message for obtaining the IP address of the user.

The message for obtaining the IP address of the user carries the identity of the user or name of the user, and a mapping relationship between the name of the user and the identity of the user is stored in the first network element.

202. The first network element allocates an IP address to the user, and sends the IP address to the second network element.

After the IP address is allocated to the user, the first network element associates the IP address allocated to the user with the identity of the user or name of the user.

Specifically, if the message for obtaining the IP address of the user carries the identity of the user, a mapping relationship between the IP address and the identity of the user is created. Alternatively, if the message for obtaining the IP address of the user carries the name of the user, the first network element obtains the identity of the user by searching stored information according to the name of the user, and then creates a mapping relationship between the IP address and the identity of the user. Alternatively, if the message for obtaining the IP address of the user carries the name of the user, a mapping relationship between the IP address and the name of the user is created. Alternatively, because the first network element stores the mapping relationship between the name of the user and the identity of the user, a mapping relationship between the IP address, the name of the user, and the identity of the user is created no matter whether the message for obtaining the IP address of the user carries the identity of the user or name of the user.

203. Receive, from a gateway, a search message that carries the IP address, and send the identity of the user to the gateway.

Specifically, the first network element obtains the IP address in the search message, and searches the mapping relationship according to the IP address to obtain the identity of the user; or obtains the name of the user by searching according to the IP address in the search message, and then searches stored information according to the name of the user to obtain the identity of the user.

After 203, the following is included: The gateway learns a mobility management element that serves the user, and through the mobility management element, a notification is sent to the user to create a connection.

Learning, by the gateway, the mobility management element that serves the user is specifically: The first network element learns information of the mobility management element that serves the user (an address of an SGSN/MME that serves the user, or a domain name of the SGSN/MME), and sends the information of the mobility management element that serves the user to the gateway; or, the first network element learns location information of the user (information of a cell that covers the user, or tracking area information, or routing area information, or tracking area list information, or an access network identity), and sends the location information of the user to the gateway. According to the location information of the user, the gateway searches a server to learn the mobility management element that serves the user; or according to the identity of the user sent by the first network element, the gateway searches an HSS/HLR to obtain information of the mobility management element that serves the user.

Learning, by the first network element, the information of the mobility management element that serves the user is specifically: searching stored information according to the name of the user or the identity of the user, or searching the HSS/HLR according to the identity of the user to obtain the information of the mobility management element that serves the user. Learning, by the first network element, the location information of the user is specifically: searching stored information according to the name of the user or the identity of the user to obtain the location information of the user.

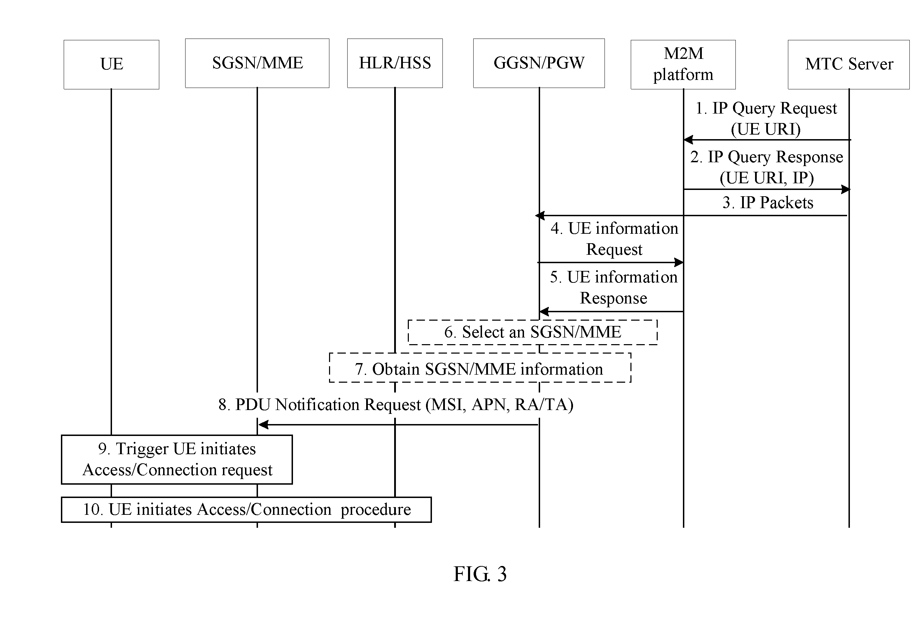

As shown in FIG. 3, a second embodiment is a specific implementation manner of the first embodiment, and is described by using a detailed signaling procedure.

Step 1: A second network element sends, to a first network element, a message for obtaining an IP address of a user (for example, an IP address search message or an IP address request message).

The message for obtaining the IP address of the user carries a name of the user or an identity of the user. Specifically, the first network element stores a mapping relationship between the name of the user and the identity of the user.

Step 2: The first network element allocates an IP address to the user. The first network element sends, to the second network element, the IP address allocated to the user.

If the message for obtaining the IP address of the user in step 1 carries a name of the user, the first network element searches stored information according to the name of the user to obtain the identity of the user. For example, the first network element searches the mapping relationship between the name of the user and the identity of the user according to the name of the user to obtain the identity of the user.

If the message for obtaining the IP address of the user in step 1 carries an identity of the user, the first network element obtains the identity of the user directly.

The step further includes: associating, by the first network element, the IP address allocated to the user with the identity of the user or name of the user. Specifically, the first network element may directly set up an association relationship between the IP address allocated to the user and the identity of the user, or the first network element sets up a relationship that associates the IP address allocated to the user with the name of the user (because the mapping relationship between the name of the user and the IP address exists in the first network element, the identity of the user can be further found according to the name of the user), or the first network element sets up a relationship that associates the IP address allocated to the user, the name of the user, and the identity of the user.

Step 3: The second network element sends a packet to the user according to the obtained IP address of the user, where the packet is sent to a gateway first.

Step 4: After receiving the packet, the gateway (GGSN/PGW) searches the first network element for the information of the user. Specifically, the GGSN/PGW receives the packet of the user and obtains the IP address of the user according to the packet. If no context information (bearer or PDP context) of the user (the IP address) exists on the GGSN/PGW, the GGSN/PGW obtains the information of the user (the IP address) from the first network element. For example, the GGSN/PGW searches the first network element for the information of the user according to the IP address, and the first network element returns the information of the user to the GGSN/PGW The GGSN/PGW searches the first network element for the information of the user by using a new message or an existing message. The search message carries the IP address of the user.

Step 5: The first network element receives the search message from the GGSN/PGW, and returns the identity of the user to the GGSN/PGW according to the IP address in the search message. Specifically, after receiving the search message sent by the GGSN/PGW, the first network element obtains the IP address in the search message, and searches stored information (for example, an association relationship between the IP address of the user and the identity of the user) according to the IP address to find the identity of the user associated with (corresponding to) the IP address.

Further, the first network element may also use a search response message to carry location information (such as cell information, or tracking area TA information, or routing area RA information, or tracking area list information, or access network identity (RNC ID, eNodeB ID, or BSC ID)) of the user (especially, for a user of low mobility (Low mobility), that is, a user whose location is fixed or is changing only in a specific area), or carry information of an SGSN/MME that serves the user (an SGSN/MME to which the user can be attached or has been attached, where the information may specifically be an address of the SGSN/MME or an FQDN of the SGSN/MME). The detailed process is as follows: The first network element has stored the location information of the user or the information of the SGSN/MME that serves the user, and according to the obtained name of the user or the obtained the identity of the user, the first network element searches the location information of the user or the information of the SGSN/MME that serves the user. The location information of the user or the information of the SGSN/MME that serves the user, stored in the first network element, may specifically be: a. The location information of the user or the information of the SGSN/MME that serves the user may be bound to the identity of the user or the name of the user to be pre-configured in the first network element; b. In a PDP context activation procedure or PDN connection setup procedure (including an Attach procedure) initiated by the user actively, the GGSN/PGW notifies the location information of the user or the information of the SGSN/MME that serves the user to the first network element. For example, in the PDP activation procedure or PDN connection setup procedure initiated by the user, the GGSN obtains the location information of the user or the information of the SGSN/MME that serves the user, the GGSN/PGW sends a Register message to the first network element, where the Register message carries the identity of the user and the location information of the user or the information of the SGSN/MME that serves the user, and the first network element stores the location information of the user or the information of the SGSN/MME that serves the user (the first network element binds the location information of the user or the information of the SGSN/MME that serves the user to the identity of the user, or, because a relationship between the identity of the user and the name of the user already exists in the first network element, the first network element may also bind the location information of the user or the information of the SGSN/MME that serves the user to the name of the user). After the GGSN/PGW notifies the location information of the user or the information of the SGSN/MME that serves the user to the first network element, it is appropriate to delete the PDP context of the user or PDN connection of the user (including the scenario where the user is in a detached state).

The first network element may also search an HLR/HSS for the information of the SGSN/MME that serves the user (the information of the SGSN/MME to which the user is attached). Specifically, the first network element may send a search message to the HLR/HSS, where the search message carries the identity of the user. According to the identity of the user, the HLR/HSS searches the registration information of the user to obtain the SGSN/MME to which the user is attached, and the HLR/HSS sends to the first network element the information of the SGSN/MME to which the user is attached.

In addition, if the first network element has already stored information of an APN used by the user, the first network element may send, to the GGSN, a search response message that carries the APN information. Specifically, the first network element has already stored the information of the APN used by the user; after obtaining the name of the user or the identity of the user, the first network element searches, according to the name of the user or the identity of the user, the APN used by the user. Before sending a connection setup request to the GGSN/PGW, the first network element needs to address the GGSN/PGW that can serve a user under the first network element. Specifically, the first network element configures information of the GGSN/PGW that can serve the user (for example, an address or FQDN of the GGSN/PGW). For example, according to a group identity (such as a Group ID, an APN, an IMSI number segment, and so on) of a group to which the user belongs, the first network element configures the information of the GGSN/PGW that can serve the group. After obtaining the identity of the user or the APN used by the user, the first network element learns, according to the identity of the user or the APN used by the user, the group to which the user belongs, and then, according to the obtained group identity of the group to which the user belongs, the first network element searches information of the GGSN/PGW which is locally configured and is corresponding to the group identity. A Diameter or Radius protocol (which is subject to enhancement and extension) may be applied between the first network element and the GGSN/PGW.

Step 6: If the first network element provides the GGSN/PGW with the location information of the user or the information of the SGSN/MME that serves the user in step 5, the GGSN/PGW may learn, according to the location information of the user or the information of the SGSN/MME that serves the user, the SGSN/MME that serves the user (the SGSN/MME to which the user can be attached or has been attached).

If the first network element provides the GGSN/PGW with the information of the SGSN/MME that serves the user (for example, an address or FQDN of the SGSN /MME) in step 5, the SGSN/MME that serves the user is obtained directly.

If the first network element provides the GGSN/PGW with the location information of the user (for example, an RA or a TA that covers the user) in step 5, the GGSN/PGW may search a server (such as a DNS server or a server of the GGSN) according to the location information of the user to obtain information of the SGSN/MME. For example, the GGSN/PGW sends a search request to the DNS server, where the search request carries an RA or a TA or an access network identity, and the DNS server performs parsing according to the RA or TA or access network identity to obtain information of the SGSN/MME, and sends the information to the GGSN/PGW Alternatively, the association between the RA and the SGSN or between the TA and the MME information is configured on the GGSN/PGW After obtaining the RA or TA, the GGSN/PGW searches the mapping relationship to obtain the SGSN/MME.

Step 7: If the connection setup request message sent by the first network element to the GGSN does not carry the location information of the user or the information of the SGSN/MME that serves the user in step 5, the GGSN sends a request to an HLR according to the identity of the user to request the SGSN/MME that serves the user.

Specifically, the procedure for the GGSN to obtain, from the HLR, the information of the SGSN to which the user is attached falls within the prior art and is not repeated herein.

Step 8: In step 6 or step 7, the GGSN/PGW has learned the SGSN/MME that can serve the user. The GGSN/PGW sends a connection setup indication message to the learned SGSN/MME.

In the GERAN/UTRAN, the connection setup indication message may be a PDU Notification Request message (sent by the GGSN to the SGSN). The PDU Notification Request message carries the identity of the user (such as an IMSI). In step 5, if the first network element provides the GGSN with the location of the user (for example, an RA that covers the user), the GGSN carries the location information of the user in the PDU Notification Request message to the SGSN. In step 5, if the first network element also provides the GGSN with the APN used by the user, the GGSN carries the APN used by the user in the PDU Notification Request message to the SGSN. The SGSN may notify the APN to the user, so that the user initiates connection setup according to the APN.

In an E-UTRAN, the connection setup indication message may be a Downlink Notification Request message (sent by the PGW to the SGW, and then sent by the SGW to the MME). The Downlink Notification Request message carries the identity of the user (such as an IMSI). In step 5, if the first network element provides the PGW with the location information of the user (for example, a TA that covers the user), the PGW carries the user location information in the Downlink Notification Request message to the MME.

Step 9: The SGSN/MME triggers the user to initiate a connection setup procedure. The connection setup procedure refers to a PDP context activation procedure or a PDN connection setup procedure.

In a GERAN/UTRAN, if the user is in an attached state and in a connected state, the SGSN sends a Request PDP Context Activation message to the user. If the user is in an idle state (Idle or Standby state), the SGSN pages the user; after receiving a paging message, the user creates a connection to the SGSN, and the SGSN sends a Request PDP Context Activation message to the user. After receiving the Request PDP Context Activation message, the user initiates a PDP context activation procedure. In step 5, if the SGSN obtains the location of the user (for example, an RA that covers the user), the SGSN pages the user in the location range of the user.

In a GERAN/UTRAN, if the user is in a detached state, the SGSN sends a paging message to the user, where the paging message carries an IMSI of the user; after receiving the paging message that carries the IMSI, the user may initiate an attach procedure. After the user initiates the attach procedure, the SGSN sends a Request PDP Context Activation message to the user. After receiving the Request PDP Context Activation message, the user initiates a PDP context activation procedure. Alternatively, if the user is in a detached state, the SGSN sends a paging message to the user, where the paging message carries an IMSI of the user; further, the paging message carrying the IMSI carries instruction information that instructs the user to initiate a PDP context activation procedure. After receiving the paging message carrying the IMSI, the user initiates an attach procedure, and then initiates a PDP context activation procedure according to the instruction information. In step 5, if the SGSN obtains the location of the user (for example, an RA that covers the user), the SGSN pages the user in the location range of the user.

In an E-UTRAN, if the user is in a detached state, the MME sends a paging message to the user, where the paging message carries an IMSI of the user; after receiving the paging message that carries the IMSI, the user may initiate an attach procedure. In the attach procedure, the user creates a PDN connection. In step 5, if the MME obtains the location of the user (for example, a TA that covers the user), the MME pages the user in the location range of the user.

Step 10: The user initiates a PDP context activation procedure or a PDN connection setup procedure. As triggered by the SGSN/MME, the user initiates a PDP context activation procedure or a PDN connection setup procedure. After the connection is created, the gateway sends a packet to a terminal, so as to create a connection between the user and the second network element.

In the above embodiment, a first network element allocates an IP address to a user and sends the IP address to a second network element, and after receiving, from a gateway, a search message that carries the IP address, sends the IP address of the user to the gateway. Therefore, both the gateway and the second network element obtain the IP address of the user, and the user can create a connection to the second network element, thereby solving the problem in the prior art that the second network element is unable to obtain the IP address because a static IP address cannot be configured for an M2M terminal when a network pushes a service.

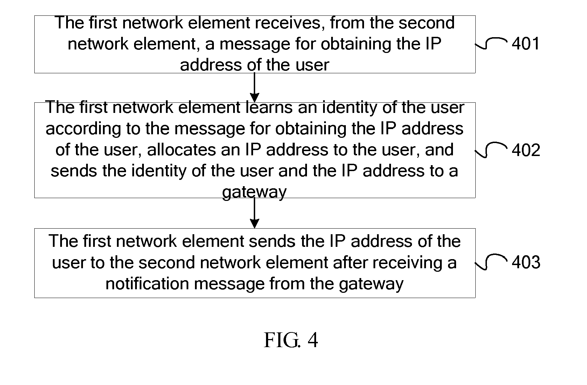

FIG. 4 is a schematic flowchart of another method for obtaining an IP address of a user according to a third embodiment of the present invention. In the embodiment, a first network element allocates an IP address, and after a user creates a connection, the IP address is sent to a second network element.

401. The first network element receives, from the second network element, a message for obtaining the IP address of the user.

The message carries an identity of the user or a name of the user.

402. The first network element learns an identity of the user according to the message for obtaining the IP address of the user, allocates an IP address to the user, and sends the identity of the user and the IP address to a gateway.

Obtaining, by the first network element, the identity of the user according to the message for obtaining the IP address of the user includes: if the message for obtaining the IP address of the user carries the identity of the user, obtaining, by the first network element, the identity of the user from the message for obtaining the IP address of the user; or if the message for obtaining the IP address of the user carries the name of the user, obtaining, by the first network element, the identity of the user by searching stored information according to the name of the user.

After this step, the following is included: The gateway learns a mobility management element that serves the user, and through the mobility management element, a notification is sent to the user to create a connection. After a connection is created for the user, the gateway sends a notification message to the first network element.

Learning, by the gateway, the mobility management element that serves the user is specifically: The first network element learns information of the mobility management element that serves the user (an address of the SGSN/MME that serves the user, or a domain name of the SGSN/MME), and sends the information of the mobility management element that serves the user to the gateway; or, the first network element learns the location information of the user (cell information, or tracking area information, or routing area information, or tracking area list information, or an access network identity), and sends the location information of the user to the gateway. By searching a server according to the location information of the user, the gateway learns the mobility management element that serves the user; or, by searching an HSS/HLR according to the identity of the user sent by the first network element, the gateway obtains the information of the mobility management element that serves the user.

Learning, by the first network element, the information of the mobility management element that serves the user is specifically: searching stored information according to the name of the user or the identity of the user, or searching the HSS/HLR according to the identity of the user to obtain the information of the mobility management element that serves the user. Learning, by the first network element, the location information of the user is specifically: searching stored information according to the name of the user or the identity of the user to obtain the location information of the user.

403. The first network element sends the IP address of the user to the second network element after receiving a notification message from the gateway.

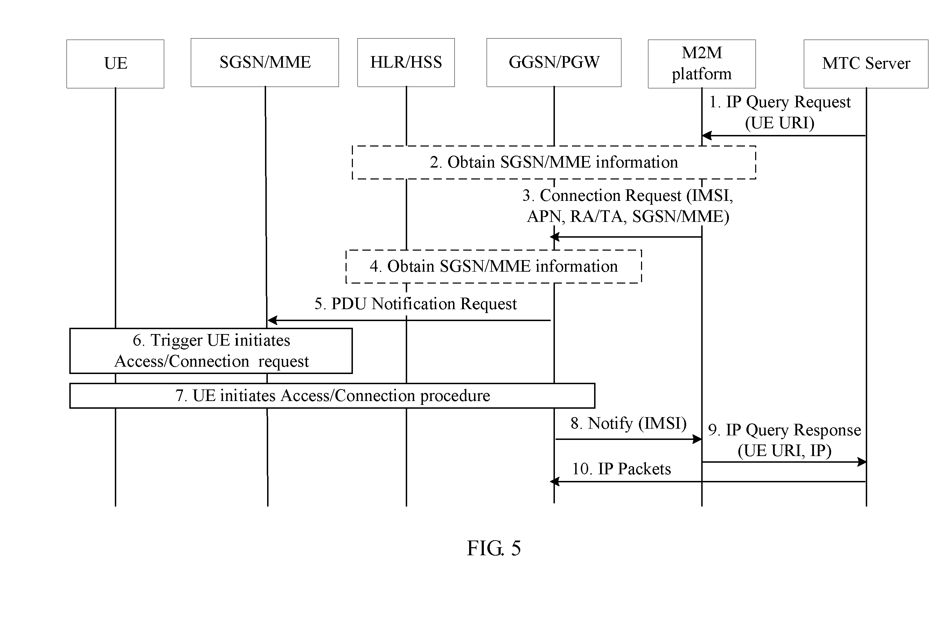

As shown in FIG. 5, a fourth embodiment is a specific implementation manner of the third embodiment, and is described by using a detailed signaling procedure.

Step 1: A second network element (an application server such as an MTC Server) sends a message for obtaining an IP address of a user (for example, an IP address search message or an IP address request message) to a first network element (M2M platform/M2M Proxy).

The message carries a name of the user or an identity of the user.

Steps 2 and 3: The first network element allocates an IP address to the user after receiving, from the second network element, the request message for obtaining the IP address, and carries the IP address in a connection setup request message to a gateway. The first network element causes the user to initiate a connection setup procedure through the gateway (GGSN/PGW) (a PDP context activation procedure or a PDN connection setup procedure).

The first network element sends a connection setup request message to the gateway, where the message carries the identity of the user (IMSI or MSISDN or IMEI, or the like). The first network element may obtain the identity of the user by searching stored information according to the name of the user carried in the message sent by the second network element in step 1. Specifically, the first network element has already stored an association relationship between the identity of the user and the name of the user, and obtains the identity of the user by searching the association relationship according to the name of the user sent by the second network element. The first network element may also obtain the identity of the user directly from the message sent by the application server in step 1. For the detailed process, reference may be made to the corresponding part in step 2 in the second embodiment.

Optionally, if the first network element has already stored an APN used by the user, the first network element may carry the APN used by the user in the connection setup request message. For the detailed process, reference may be made to the corresponding part in step 5 in the second embodiment.

Optionally, the first network element carries, in the connection setup request message, information (an address or FQDN of the SGSN/MME) of a mobility management element that serves the user (to which the user is attached). The methods for the first network element to obtain the information of the mobility management element that serves the user (for the detailed process, reference may also be made to the corresponding part in step 5 in the second embodiment) are in the following:

1) The first network element sends a search message to an HLR/HSS to search the information (an address or FQDN) of the SGSN/MME to which the user is attached. The search message carries the identity of the user (IMSI or MSISDN or IMEI, or the like). According to the identity of the user, the HLR/HSS searches registration information of the user on the HLR/HSS to obtain the information of the SGSN/MME to which the user is attached, and sends the information to the first network element; or

2) By searching stored information according to the name of the user or the identity of the user, the first network element obtains the information of the mobility management element that serves the user. Specifically, after obtaining the name of the user or the identity of the user, the first network element searches a stored table of a binding relationship between a name of a user or an identity of a user and information of a SGSN/MME that serves the user to obtain the information of the mobility management element that serves the user; or

3) After obtaining the name of the user or the identity of the user, the first network element searches a locally stored table of a binding relationship between a name of a user or an identity of a user and location information of a user (for example, information of a cell that covers the user, or tracking area information, or routing area information, or tracking area list information, or access network identity information) to obtain the location information of the user. According to the obtained location information of the user, the first network element searches a server (such as a DNS server) for the information of the mobility management element that serves the user.

Optionally, if the first network element has already stored the location information of the user, the first network element carries the location information of the user in the connection setup request message to the gateway.

Step 4: If the first network element does not send the information of the mobility management element that serves the user or the location information to the gateway in step 3, the gateway may search the HLR/HSS for the information of the mobility management element that serves the user. Specifically, the gateway sends a routing information message to the HLR/HSS, where the message carries the identity of the user. The HLR/HSS searches the information registered on the HLR/HSS by the user, and sends the information of the mobility management element that serves the user to the gateway.

If the first network element sends, to the gateway, the location information of the user instead of the information of the mobility management element that serves the user in step 3, the gateway may search and learn, according to the location information, the mobility management element that serves the user in the following way: According to the obtained location information of the user (such as cell information, tracking area information, routing area information, tracking area list information, access network identity information, or the like), the gateway searches a server (such as a DNS server) for the information of the mobility management element that can serve the user in the location mentioned above. The server has already stored a binding (association) relationship between the location information and the information of the mobility management element that can serve the user in the location.

Step 5: The gateway sends a connection setup indication message to the learned SGSN/MME, where the message carries the IP address of the user and the identity of the user.

In this embodiment, two messages are given as examples to represent the connection setup indication message. Of course, the connection setup indication message may be represented by other messages. In a GERAN/UTRAN, the connection setup indication message may be a PDU Notification Request message (sent by the GGSN to the SGSN). The PDU Notification Request message carries the identity of the user (such as an IMSI). In step 3, if the first network element provides the GGSN with the location of the user (for example, an RA that covers the user), the first network element carries the location information of the user in the PDU Notification Request message to the SGSN. In step 3, if the first network element also provides the GGSN with the APN used by the user, the GGSN carries the APN used by the user in the PDU Notification Request message to the SGSN.

In an E-UTRAN, the connection setup indication message may be a Downlink Notification Request message (sent by the PGW to the SGW, and then sent by the SGW to the MME). The Downlink Notification Request message carries the identity of the user (such as an IMSI). In step 3, if the first network element provides the PGW with the location information of the user (for example, a TA that covers the user), the PGW sends the location information of the user by carrying it in the Downlink Notification Request message to the MME. In step 3, if the first network element provides the PGW with the APN used by the user, the PGW sends the information of the APN used by the user by carrying it in the Downlink Notification Request message to the MME.

Step 6: The SGSN/MME triggers the user to initiate a connection setup procedure. The connection setup procedure refers to a PDP context activation procedure or a PDN connection setup procedure (including an attach procedure).

Because the SGSN obtains the IP address allocated by the first network element to the user, the IP address of the user is carried to the user when the SGSN triggers the user to initiate a connection setup procedure, and the user carries the IP address in a request PDP context activation message.

In a GERAN/UTRAN, if the user is in an attached state and in a connected state, the SGSN sends a Request PDP Context Activation message to the user. If the user is in an idle state (Idle or Standby state), the SGSN pages the user; after receiving a paging message, the user creates a connection to the SGSN, and the SGSN sends a Request PDP Context Activation message to the user. After receiving the Request PDP Context Activation message, the user initiates a PDP context activation procedure.

In a GERAN/UTRAN, if the user is in a detached state, the SGSN sends a paging message to the user, where the paging message carries an IMSI of the user; after receiving the paging message that carries the IMSI, the user may initiate an attach procedure. After the user initiates the attach procedure, the SGSN sends a Request PDP Context Activation message to the user. After receiving the Request PDP Context Activation message, the user initiates a PDP context activation procedure. If the SGSN obtains the IP address allocated by the first network element to the user in step 5, the SGSN carries the IP address of the user in the Request PDP Context Activation message to the user, and the user carries the IP address in the request PDP context activation message. Alternatively, if the user is in a detached state, the SGSN sends a paging message to the user, where the paging message carries an IMSI of the user; further, the paging message carrying the IMSI carries instruction information that instructs the user to initiate a PDP context activation procedure. After receiving the paging message carrying the IMSI, the user may initiate an attach procedure, and then initiates a PDP context activation procedure according to the instruction information. In step 5, if the SGSN obtains the location of the user (for example, an RA that covers the user), the SGSN pages the user in the location range of the user.

In an E-UTRAN, if the user is in a detached state, the MME sends a paging message to the user, where the paging message carries an IMSI of the user; after receiving the paging message that carries the IMSI, the user may initiate an attach procedure. In the attach procedure, the user creates a PDN connection. In step 5, if the MME obtains the location of the user (for example, a TA that covers the user), the MME pages the user in the location range of the user.

Step 7: The user initiates a PDP activation procedure or a PDN connection setup procedure. The user receives the Request PDP Context Activation message sent by the SGSN. If the message carries the IP address allocated by the first network element to the user, the user carries the IP address in a PDP context activation message, and the GSN/PGW uses the IP address allocated by the first network element to the user as the IP address of the user.

Step 8: The gateway sends a notification message to the first network element.

The notification message carries the identity of the user or name of the user. The notification message is used as an indication to the first network element that the IP address allocated by the first network element to the user is available.

Step 9: The first network element sends the IP address of the user to a second network element (MTC Server).

Step 10: The second network element sends data to the user according to the IP address.

In the above embodiment, a first network element allocates an IP address, sends the IP address and an identity of a user to a gateway, and after the user creates a connection, the IP address is sent to a second network element. Therefore, both the gateway and the second network element obtain the IP address of the user, so that the user can create a connection to the second network element, thereby solving the problem in the prior art that the second network element is unable to obtain the IP address because a static IP address cannot be configured for an M2M terminal when a network pushes a service.

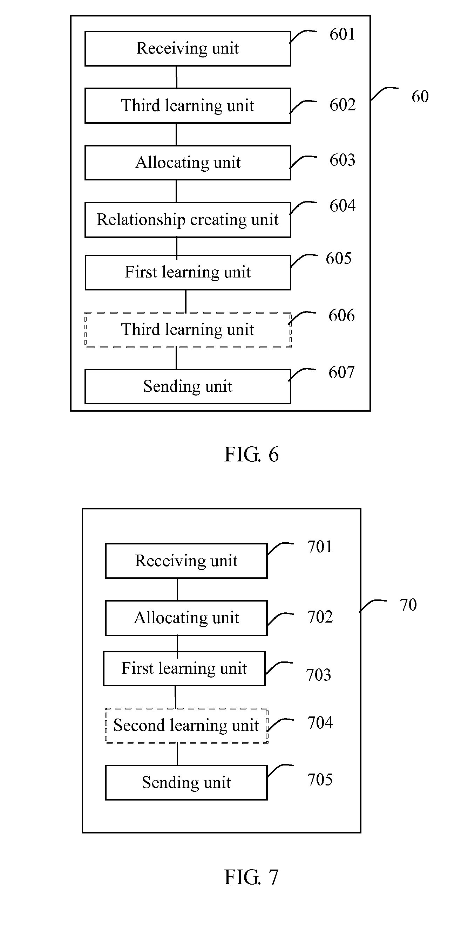

FIG. 6 is a schematic structural diagram of a network entity 60 for obtaining an IP address of a user according to a fifth embodiment of the present invention. The network entity includes a receiving unit 601, a first learning unit 605, an allocating unit 603, and a sending unit 607. The receiving unit 601 receives, from a second network element, a message for obtaining an IP address of a user; the allocating unit 603 allocates an IP address to the user; the sending unit 607 sends the IP address to the second network element; the receiving unit 601 receives, from a gateway, a search message that carries the IP address; the first learning unit 605 obtains an identity of the user according to the IP address; and the sending unit 607 sends the identity of the user to the gateway.

Further, the network entity in the embodiment further may include a second learning unit 602, configured to learn the identity of the user according to the message for obtaining the IP address of the user. Specifically, the second learning unit 602 obtains the identity of the user from the message for obtaining the IP address of the user; or, the message for obtaining the IP address of the user carries a name of the user, and the second learning unit 602 obtains the identity of the user by searching stored information according to the name of the user.

Further, the network entity in the embodiment may include a relationship creating unit 604.

After the second learning unit obtains the identity of the user and the IP address that is allocated by the allocating unit 603 to the user, the relationship creating unit 604 creates a mapping relationship between the IP address and the identity of the user, and specifically, the first learning unit 605 obtains the identity of the user according to the IP address in the following way: searching the mapping relationship between the IP address and the identity of the user according to the IP address to obtain the identity of the user.

Alternatively, if the message for obtaining the IP address of the user carries a name of the user and the IP address that is allocated by the allocating unit 603 to the user, the relationship creating unit 604 creates a mapping relationship between the IP address and the name of the user, and specifically, the first learning unit 605 obtains the identity of the user in the following way: searching the mapping relationship between the IP address and the name of the user according to the IP address in the search message to obtain the name of the user, and then searching stored information according to the name of the user to obtain the identity of the user.

Further, the network entity in the embodiment may further include a third learning unit 606. The third learning unit 606 learns, according to the name of the user or the identity of the user, information of a mobility management element that serves the user, and the sending unit 607 further sends the information of the mobility management element that serves the user to the gateway; or, the second learning unit learns the location information of the user according to the name of the user or the identity of the user, and the sending unit 607 further sends the location information of the user to the gateway.

For the detailed interaction process between the network element and other network elements, reference may be made to the foregoing method embodiment. No repeated description is given herein.

FIG. 7 is a schematic structural diagram of a network entity 70 for obtaining an IP address of a user according to a sixth embodiment of the present invention. The network entity includes a receiving unit 701, an allocating unit 702, a first learning unit 703, and a sending unit 705.

The receiving unit 701 receives, from a second network element, a message for obtaining an IP address of a user; the first learning unit 703 learns an identity of the user according to the message for obtaining the IP address of the user; the allocating unit 702 allocates an IP address to the user; the sending unit 705 sends the identity of the user and the IP address to a gateway; and the sending unit 705 sends the IP address of the user to the second network element after the receiving unit 701 receives a notification message from the gateway.

Learning, by the first learning unit 703, an identity of the user according to the message for obtaining the IP address of the user, specifically includes:
obtaining, by the first learning unit, the identity of the user from the message for obtaining the IP address of the user; or, if the message for obtaining the IP address of the user carries a name of the user, obtaining, by the first learning unit, the identity of the user by searching stored information according to the name of the user.

Further, the network entity in the embodiment may further include a second learning unit 704. The second learning unit 704 learns, according to the name of the user or the identity of the user, information of a mobility management element that serves the user, and the sending unit 705 sends the information of the mobility management element that serves the user to the gateway; or, the second learning unit 704 learns location information of the user according to the name of the user or the identity of the user, and the sending unit 705 sends the location information of the user to the gateway.

For the detailed interaction process between the network element and other network elements, reference may be made to the foregoing method embodiment. No repeated description is given herein.

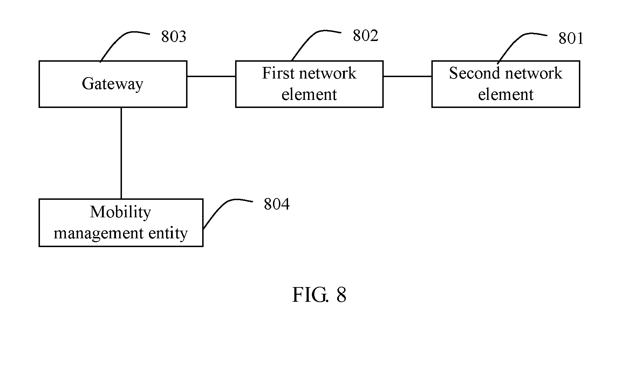

FIG. 8 is a schematic structural diagram of a network entity for obtaining an IP address of a user according to a seventh embodiment of the present invention, which includes a second network element 801, a first network element 802, a gateway 803, and a mobility management entity 804. For the functions of each network element and the interaction between the network elements, reference may be made to the foregoing method embodiment and apparatus embodiment. No repeated description is given herein.

Persons of ordinary skill in the art should understand that all or part of the steps of the methods in the embodiments may be implemented by a program instructing relevant hardware. The program may be stored in a computer readable storage medium. When the program is run, the steps of the methods in the embodiments are performed. The storage medium may be any medium capable of storing program codes, such as ROM, RAM, a magnetic disk, or an optical disk.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof; without departing from the idea and scope of the technical solutions of the embodiments of the present invention.

## Claims

1. A method for obtaining an IP address of a user, comprising:
receiving, by a first network element from a second network element, a message for obtaining an IP address of a user;
allocating, by the first network element, an IP address to the user, and sending the IP address to the second network element; and
receiving, from a gateway, a search message that carries the IP address, learning an identity of the user, and sending the identity of the user to the gateway.

2. The method according to claim 1, wherein, the method further comprises:
the message for obtaining the IP address of the user carries the identity of the user or a name of the user.

3. The method according to claim 2, wherein:
if the message for obtaining the IP address of the user carries the name of the user, the method further comprises: obtaining, by the first network element, the identity of the user by searching stored information according to the name of the user.

4. The method according to claim 2 or claim 3, wherein:
after the first network element allocates the IP address to the user, the method further comprises: creating a mapping relationship between the IP address and the identity of the user; and
the step of learning the identity of the user is specifically: obtaining the identity of the user according to the IP address in the search message.

5. The method according to claim 2, wherein:
if the message for obtaining the IP address of the user carries the name of the user, after the first network element allocates the IP address to the user, the method further comprises: creating a mapping relationship between the IP address and the name of the user, and the step of obtaining the identity of the user is specifically: obtaining the name of the user by searching according to the IP address in the search message, and then searching stored information according to the name of the user to obtain the identity of the user.

6. The method according to claim 1 or 2 or 3, wherein after the sending the identity of the user to the gateway, the method further comprises:
learning, by the gateway, a mobility management element that serves the user; and
sending a notification to the user through the mobility management element to create a connection.

7. The method according to claim 6, wherein the learning, by the gateway, the mobility management element that serves the user, is specifically:
learning, by the first network element, information of the mobility management element that serves the user, and sending the information of the mobility management element that serves the user to the gateway; or
learning, by the first network element, location information of the user, and sending the location information of the user to the gateway, and learning, by the gateway by searching a server according to the location information of the user, the mobility management element that serves the user; or
obtaining, by the gateway by searching an HSS/HLR according to the identity of the user sent by the first network element, information of the mobility management element that serves the user.

8. The method according to claim 7, wherein the learning, by the first network element, the information of the mobility management element that serves the user, is specifically:
searching stored information according to the name of the user or the identity of the user or searching an HSS/HLR according to the identity of the user to obtain the information of the mobility management element that serves the user.

9. The method according to claim 7, wherein:
the learning, by the first network element, the location information of the user is specifically: searching stored information according to the name of the user or the identity of the user to obtain the location information of the user.

10. The method according to claim 7 or 8, wherein:
the information of the mobility management element that serves the user is an address of an SGSN/MME that serves the user or a domain name of the SGSN/MME.

11. The method according to claim 7 or 9, wherein:
the location information is information of a cell that covers the user, or tracking area information, or routing area information, or tracking area list information, or an access network identity.

12. A method for obtaining an IP address of a user, comprising:
receiving, by a first network element from a second network element, a message for obtaining an IP address of a user;
learning, by the first network element, an identity of the user according to the message for obtaining the IP address of the user, allocating an IP address to the user, and sending the identity of the user and the IP address to a gateway; and
sending, by the first network element, the IP address of the user to the second network element after receiving a notification message from the gateway.

13. The method according to claim 12, wherein the obtaining, by the first network element, the identity of the user according to the message for obtaining the IP address of the user, comprises:
obtaining, by the first network element, the identity of the user from the message for obtaining the IP address of the user if the message for obtaining the IP address of the user carries the identity of the user; or
obtaining, by the first network element, the identity of the user by searching stored information according to a name of the user if the message for obtaining the IP address of the user carries the name of the user.

14. The method according to claim 12 or 13, wherein after the sending the identity of the user and the IP address to the gateway, the method further comprises:
learning, by the gateway, a mobility management element that serves the user;
sending a notification to the user through the mobility management element to create a connection; and
sending, by the gateway, the notification message to the first network element after the connection is created for the user.

15. The method according to claim 14, wherein the learning, by the gateway, the mobility management element that serves the user, is specifically:
learning, by the first network element, information of the mobility management element that serves the user, and sending the information of the mobility management element that serves the user to the gateway; or
learning, by the first network element, location information of the user, and sending the location information of the user to the gateway, and learning, by the gateway by searching a server according to the location information of the user, the mobility management element that serves the user; or
obtaining, by the gateway by searching an HSS/HLR according to the identity of the user sent by the first network element, information of the mobility management element that serves the user.

16. The method according to claim 15, wherein the learning, by the first network element, the information of the mobility management element that serves the user, is specifically:
searching stored information according to the name of the user or the identity of the user or searching an HSS/HLR according to the identity of the user to obtain the information of the mobility management element that serves the user.

17. The method according to claim 15, wherein:
the learning, by the first network element, the location information of the user, is specifically: searching stored information according to the name of the user or the identity of the user to obtain the location information of the user.

18. The method according to claim 15 or 16, wherein:
the information of the mobility management element that serves the user is an address of an SGSN/MME that serves the user or a domain name of the SGSN/MME.

19. The method according to claim 15 or 17, wherein:
the location information is information of a cell that covers the user, or tracking area information, or routing area information, or tracking area list information, or an access network identity.

20. A network entity for obtaining an IP address of a user, comprising a receiving unit, a first learning unit, an allocating unit, and a sending unit, wherein:
the receiving unit receives, from a second network element, a message for obtaining an IP address of a user; the allocating unit allocates an IP address to the user; the sending unit sends the IP address to the second network element; the receiving unit receives, from a gateway, a search message that carries the IP address; the first learning unit obtains an identity of the user according to the IP address; and the sending unit sends the identity of the user to the gateway.

21. The network entity according to claim 20, further comprising:
a second learning unit, configured to learn the identity of the user according to the message for obtaining the IP address of the user, wherein specifically, the second learning unit obtains the identity of the user from the message for obtaining the IP address of the user; or, if the message for obtaining the IP address of the user carries a name of the user, the second learning unit obtains the identity of the user by searching stored information according to the name of the user.

22. The network entity according to claim 20, further comprising a relationship creating unit, wherein:
after the second learning unit obtains the identity of the user and the allocating unit allocates the IP address to the user, the relationship creating unit creates a mapping relationship between the IP address and the identity of the user, and the first learning unit obtains the identity of the user according to the IP address in the following way: searching the mapping relationship between the IP address and the identity of the user according to the IP address to obtain the identity of the user.

23. The network entity according to claim 20, further comprising a relationship creating unit, wherein:
if the message for obtaining the IP address of the user carries a name of the user and the allocating unit allocates the IP address to the user, the relationship creating unit creates a mapping relationship between the IP address and the name of the user, and the first learning unit obtains the identity of the user in the following way: searching the mapping relationship between the IP address and the name of the user according to the IP address in the search message to obtain the name of the user, and then searching stored information according to the name of the user to obtain the identity of the user.

24. The network entity according to claim 22, further comprising a third learning unit, wherein:
the third learning unit learns, according to a name of the user or the identity of the user, information of a mobility management element that serves the user, and the sending unit further sends the information of the mobility management element that serves the user to the gateway; or, the second learning unit learns location information of the user according to a name of the user or the identity of the user, and the sending unit further sends the location information of the user to the gateway.

25. A network entity for obtaining an IP address of a user, comprising a receiving unit, a sending unit, an allocating unit, and a first learning unit, wherein:
the receiving unit receives, from a second network element, a message for obtaining an IP address of a user;
the first learning unit learns an identity of the user according to the message for obtaining the IP address of the user;
the allocating unit allocate the IP address to the user;
the sending unit sends the identity of the user and the IP address to a gateway; and
the sending unit sends the IP address of the user to the second network element after the receiving unit receives a notification message from the gateway.

26. The network entity according to claim 25, wherein the learning, by the first learning unit, the identity of the user according to the message for obtaining the IP address of the user, specifically comprises:
obtaining, by the first learning unit, the identity of the user from the message for obtaining the IP address of the user; or, obtaining, by the first learning unit, the identity of the user by searching stored information according to a name of the user if the message for obtaining the IP address of the user carries the name of the user.

27. The network entity according to claim 25 or 26, further comprising a second learning unit, wherein:
the second learning unit learns, according to the name of the user or the identity of the user, information of a mobility management element that serves the user, and the sending unit sends the information of the mobility management element that serves the user to the gateway; or, the second learning unit learns location information of the user according to the name of the user or the identity of the user, and the sending unit sends the location information of the user to the gateway.
